# EUROPEAN PATENT APPLICATION

(11) **EP 4 730 907 A1**
(43) Date of publication of application: **22.04.2026**
(21) Application number: 24823244.9
(22) Date of filing: 31.05.2024
(51) Int. Cl.: H04W 76/30, H04W 16/26, H04W 52/02, H04W 88/04, H04W 92/18

(54) **COMMUNICATION DEVICE, BASE STATION, CONTROL METHOD, AND PROGRAM**

(30) Priority: 13.06.2023 JP 2023096727
(71) Applicant: Canon Kabushiki Kaisha, Tokyo, 146-8501 (JP)
(72) Inventor: NISHIYAMA Kosuke, Tokyo 146-8501 (JP)
(74) Representative: Canon Europe Limited
(86) International application number: PCT/JP2024/019965
(87) International publication number: WO 2024/257624

(57) **Abstract**

A communication apparatus is disclosed that includes a Sidelink relay unit configured to relay communication between a base station and remote user equipment (UE), a generation unit configured to generate a Sidelink Adaptation Protocol (SRAP) control protocol data unit (PDU) that is a PDU of SRAP, and a transmission unit configured to transmit the SRAP control PDU generated by the generation unit, wherein, in a case where a predetermined condition is satisfied under a situation where relay by the Sidelink relay unit is performed, the generation unit stores, in the SRAP control PDU, stop-related information related to a stop of the relay by the Sidelink relay unit.

## Description

### Technical Field

The present disclosure relates to a communication apparatus, a base station, a control method, and a program.

### Background Art

In recent years, development of specifications of Long Term Evolution (LTE) and New Radio (NR) of 3rd Generation Partnership Project (3GPP^{®}) is progressing. Among the specifications, a standard specification called Sidelink communication has been developed. The specification realizes direct wireless communication between apparatuses by using an interface called PC5 without through a mobile communication network (core network).

Further, development of a specification of the 3GPP^{®} for expanding a Sidelink communicable range by a Sidelink relay function of relaying Sidelink communication through a relay apparatus (relay UE) is progressing. There is defined means for switching the path for a communication terminal (remote UE) having a function of establishing connection with a base station through the Sidelink relay function, from an indirect path. In other words, there is defined means for switching the communication from communication (indirect path) in which connection with the base station is established through the relay UE to direct communication (direct path) with the base station without disconnecting service, and means for switching the path from the direct path to the indirect path without disconnecting service.

PLT 1 describes means for causing the remote UE to switch the path from the indirect path to the direct path without disconnecting service.

### Citation List

### Patent Literature

PLT1: United States Patent Publication Application No. 2022/0377822

### Summary of Invention

### Technical Problem

Switching of the path is determined mainly based on signal intensity between the remote UE and the relay UE and signal intensity between the remote UE and the base station, and circumstances in the relay UE are not considered. Examples of the circumstances in the relay UE include a battery remaining amount of the relay UE and a fail-soft function caused by disappearance of a part of processes. In a case where the relay function cannot be continued due to the circumstances in the relay UE, a mechanism for transmitting the fact to the base station does not exist at present. In this case, if the relay function of the relay UE is suddenly stopped, a sequence for reconnection with the base station runs, which may deteriorate service continuity.

The present invention is made in consideration of at least one of the above-described issues. The present invention is directed to a mechanism that enables a base station to use information related to stop of a relay function of relay UE.

### Solution to Problem

According to an aspect of the present invention, a base station includes a communication unit configured to communicate with remote user equipment (UE) via relay UE, a reception unit configured to receive a Sidelink Adaptation Protocol (SRAP) control protocol data unit (PDU), which is a PDU of SRAP, from the relay UE, and a control unit configured to, in a case where the reception unit receives the SRAP control PDU in which stop-related information related to a stop of relay performed via the relay UE is stored, perform communication control for the communication unit based on the stop-related information.

### Advantageous Effects of Invention

According to one aspect of the present invention, it is possible to provide the mechanism that enables the base station to use the information related to stop of the relay function of the relay UE.

### Brief Description of Drawings

[Fig. 1] Fig. 1 is a diagram illustrating a configuration of a communication apparatus according to embodiments.
[Fig. 2] Fig. 2 is a block diagram illustrating an example of a functional configuration of a base station according to the embodiments.
[Fig. 3] Fig. 3 is a block diagram illustrating an example of a functional configuration of relay user equipment (UE) according to the embodiments.
[Fig. 4] Fig. 4 is a diagram illustrating an example of a configuration of a relay function continuation impossibility notification according to a first embodiment.
[Fig. 5] Fig. 5 is a diagram illustrating an example of a configuration of a relay function continuation impossibility notification according to the first embodiment.
[Fig. 6] Fig. 6 is a flowchart between communication apparatuses according to the first embodiment.
[Fig. 7] Fig. 7 is a diagram illustrating an example of a configuration of a relay function continuation impossibility notification according to a second embodiment.
[Fig. 8] Fig. 8 is a flowchart between communication apparatuses according to the second embodiment.

### Description of Embodiments

The embodiments will be described in detail below with reference to the accompanying drawings. In the accompanying drawings, the same reference numerals are assigned to identical or similar components, and redundant descriptions may be omitted.

### <First Embodiment>

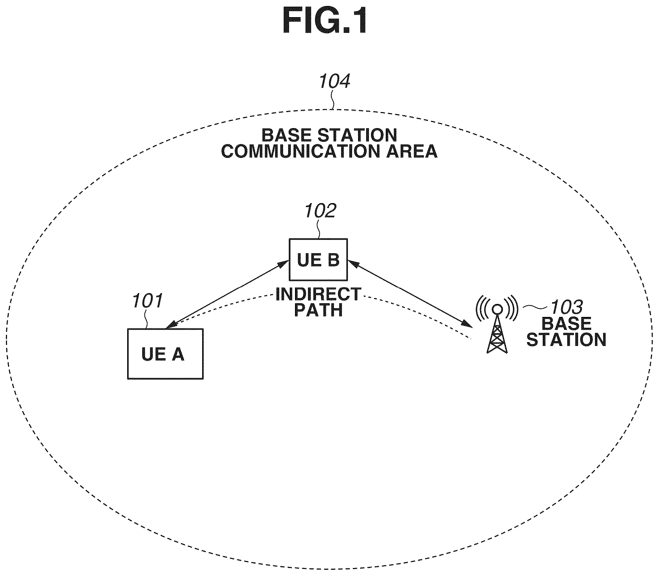

Fig. 1 is a diagram illustrating an example of a configuration of a system according to the present embodiment. In Fig. 1, user equipment (UE) A (101) and UE B (102) are in a communication area 104 of a base station 103.

In the present embodiment, the UE is assumed to be a terminal supporting Sidelink relay communication. More specifically, the UE is assumed to be a smartphone or the like, but is not limited thereto. For example, the UE may be a communication terminal such as a tablet terminal and a personal computer (PC), a wearable terminal such as a smartwatch and a head-mounted display, or a car navigation apparatus installed in an automobile.

In Fig. 1, the UE A (101) operates as remote UE, and communicates with the base station 103 by using Sidelink relay communication. The UE B (102) operates as relay UE, and relays the communication between the UE A (101) and the base station 103 by using a Sidelink relay function. In other words, the UE A (101) is transmitting and receiving data to and from the base station via an indirect path through the UE B (102).

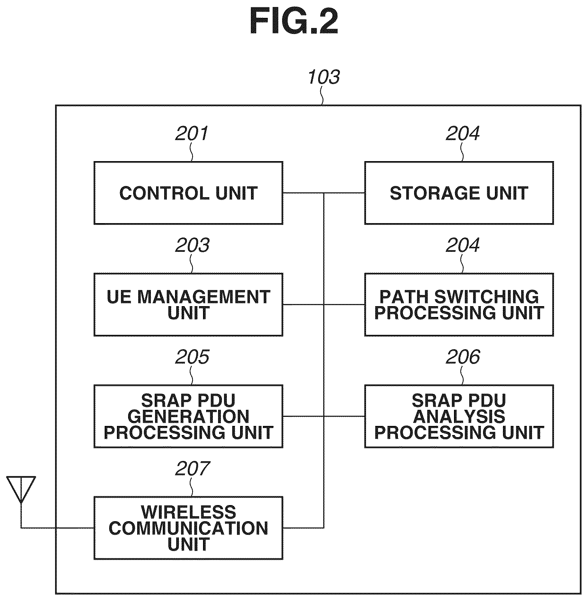

Fig. 2 is a block diagram illustrating an example of a functional configuration of the base station 103 according to the present embodiment.

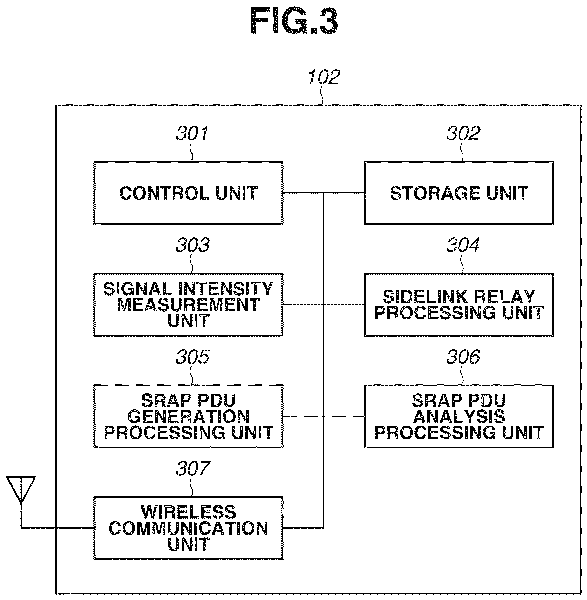

Some or all of the functional blocks in Fig. 2 described below (and similarly in Fig. 3 described below) may be replaced with other functional blocks that have similar functions, and some of the functional blocks may be omitted. Further, new functional blocks may also be added. A single functional block described below may be divided into a plurality of functional blocks, or a plurality of functional blocks may be integrated into a single functional block.

In the example illustrated in Fig. 2, the base station 103 includes a control unit 201, a storage unit 202, a UE management unit 203, a path switching processing unit 204, a Sidelink Relay Adaptation Protocol (SRAP) protocol data unit (PDU) generation processing unit 205, an SRAP PDU analysis processing unit 206, and a wireless communication unit 207.

The control unit 201 controls the operation of the base station 103. The control unit 201 includes, for example, one or more processors such as a central processing unit (CPU) and a microprocessor unit (MPU), and controls the entire communication apparatus by executing control programs read out into a random access memory (RAM) serving as the storage unit 202. Each process performed by the control unit 201, which will be described in a flowchart described below, may also be implemented using a hardware circuit such as an application specific integrated circuit (ASIC) and a field programmable gate array (FPGA). ASIC is an abbreviation for application specific integrated circuit, and FPGA is an abbreviation for field programmable gate array. The processing described in the flowchart described below may also be implemented by cooperation between the hardware circuit and the processors such as the CPU and the MPU.

The storage unit 202 stores information used by the control unit 201 for control and information related to communication. The storage unit 202 may include a main storage unit and an auxiliary storage unit. The main storage unit may be, for example, a read only memory (ROM) or a RAM. The main storage unit may store or temporarily store programs and data such as an operating system (OS) that is basic software executed by the control unit 201, and application software. The auxiliary storage unit may be, for example, a hard disk drive (HDD) and a solid state drive (SSD), and may store data related to application software and the like. For example, a control program stored in a nonvolatile storage area may be loaded into the RAM, and executed by the processors included in the control unit 201. In this manner, the control unit 201 and the storage unit 202 may function as a so-called computer.

The storage unit 202 may include a recording medium that stores a predetermined program. The program stored in the recording medium may be installed via a drive device or the like, and the installed predetermined program may be made executable by the control unit 201. As the recording medium, various types of recording media can be used. For example, the recording medium may be a recording medium that optically, electrically, or magnetically records information, such as a compact disc (CD)-ROM, a flexible disk, and a magneto-optical disk. Further, the recording medium may also be a semiconductor memory or the like that electrically records information, such as a ROM and a flash memory.

A carrier wave is not included in the recording medium.

The UE management unit 203 manages UE information in a base station area. The UE management unit 203 manages UE information including the identification (IDs) of subordinate UEs and measurement results reported from the subordinate UEs (such as the signal strength of a Uu link described below).

The path switching processing unit 204 determines whether the managed UE is connected via an indirect path or a direct path, based on the UE information managed by the UE management unit 203.

The SRAP PDU generation processing unit 205 generates a message used for a path switching instruction. In the present embodiment, the SRAP PDU generation processing unit 205 generates a PDU used in SRAP (Sidelink Adaptation Protocol) (SRAP PDU). The SRAP is a protocol used for a New Radio (NR) Sidelink relay function.

The SRAP PDU analysis processing unit 206 analyzes the SRAP PDU received from a controlled relay UE (hereinafter, also referred to as "subordinate relay UE").

The functions equivalent to the UE management unit 203, the path switching processing unit 204, and/or the SRAP PDU generation processing unit 205 may be implemented as software modules realized by the control unit 201.

The wireless communication unit 207 transmits and receives information with the subordinate UE through wireless communication. For example, the wireless communication unit 207 performs processing for transmitting the message generated by the SRAP PDU generation processing unit 205, processing for receiving the SRAP PDU from the subordinate UE, and processing for receiving other necessary wireless signals.

Fig. 3 is a block diagram illustrating an example of a functional configuration of a relay UE (102) according to the present embodiment.

In the example illustrated in Fig. 3, the relay UE (102) includes a control unit 301, a storage unit 302, a signal intensity measurement unit 303, a Sidelink Relay processing unit 304, an SRAP PDU generation processing unit 305, an SRAP PDU analysis processing unit 306, and a wireless communication unit 307.

The control unit 301 controls the operation of the relay UE (102). The control unit 301 includes one or more processors such as a CPU and an MPU, and controls the entire communication apparatus by executing control programs read out into a RAM serving as the storage unit 302. Each process performed by the control unit 301, which will be described in the flowchart described below, may also be implemented using a hardware circuit such as an ASIC and a FPGA. The processing described in the flowchart described below may also be implemented by cooperation between the hardware circuit and the processors such as the CPU and the MPU.

The storage unit 302 stores information used by the control unit 301 for control and information related to communication.

The signal intensity measurement unit 303 measures "signal intensity with the remote UE (PC5 link)" and "signal intensity with the base station (Uu link)" as seen from the relay UE (102).

The Sidelink Relay processing unit 304 establishes a Sidelink connection with the remote UE. As a result, the Sidelink Relay processing unit 304 enables communication between the remote UE and the base station 103 (i.e., indirect path) to be relayed via an NR Sidelink relay function of the relay UE. In the following, the NR Sidelink relay function is also simply referred to as a Sidelink relay function.

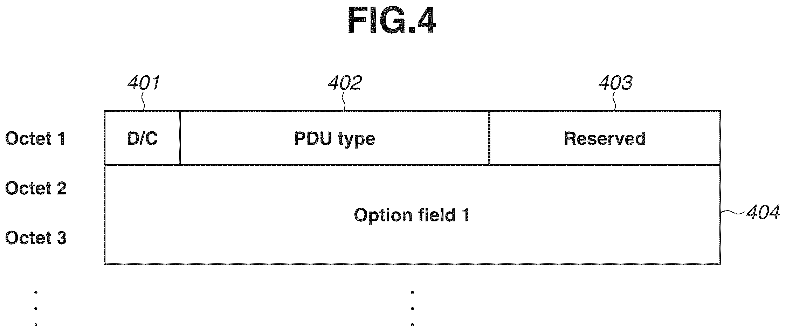

The SRAP PDU generation processing unit 305 generates an SRAP PDU as with the SRAP PDU generation processing unit 205 of the base station 103 described above. In the present embodiment, when the relay UE determines that its own NR Sidelink relay function cannot be continued, the SRAP PDU generation processing unit 305 generates a PDU (example of stop-related information) for notifying the base station 103 that the relay function cannot be continued. Details of the PDU for notifying the base station 103 that the relay function cannot be continued will be described below with reference to Fig. 4.

The SRAP PDU analysis processing unit 306 analyzes the SRAP PDU received from the remote UE and the base station 103.

The wireless communication unit 307 transmits and receives information to and from the remote UE and the base station 103 via wireless communication. The wireless communication unit 307 performs processing for transmitting the SRAP PDU generated by the SRAP PDU generation processing unit 305, processing for receiving the SRAP PDU from the remote UE and the base station 103, and other necessary receiving processing via wireless communication.

Fig. 4 illustrates a configuration example of a PDU indicating that the relay function cannot be continued.

In SRAP, in a case where the PDU has a value of 0 in the one-bit Data/Control field (D/C field) 401, it indicates that the PDU is data (i.e., SRAP DATA PDU). Conversely, in a case where the PDU has a value of 1 in the one-bit D/C field 401, it indicates that the PDU is a control message (i.e., SRAP Control PDU). In the PDU indicating that the relay function cannot be continued, the value in the D/C field 401 is set to 1. In the present embodiment, in a case where the D/C field 401 has a value indicating an SRAP control PDU, the configuration additionally includes a 4-bit PDU type field 402 and a 3-bit Reserved field 403. Furthermore, in the case where the D/C field 401 has a value indicating an SRAP control PDU, the fields following the Reserved field 403 are configured as optional fields.

In a case where the PDU is an SRAP control PDU, the PDU type field 402 indicates whether the relay function cannot be continued. In the present embodiment, in a case where the PDU type field 402 has a value of 0000, it indicates that "the relay function cannot be continued". Note that the value 0000 is illustrative, and any other value may be used as long as it does not overlap with the values of other PDU types.

In the present embodiment, an SRAP control PDU that includes a value corresponding to "relay function cannot be continued" is described as an example of stop-related information; however, this is not limited thereto. Any information that indicates that relay cannot be continued, that relay operation cannot be maintained, or the like is acceptable. For example, a value corresponding to relay radio link failure (RLF) or the like, which indicates that a problem related to radio link for relaying has occurred, or an SRAP Control PDU, may also be used as stop-related information. In other words, the stop-related information according to the present embodiment can be modified in any way as long as the information has the effect of notifying the base station that a communication interruption may occur. That is, the above-described specific examples are mere examples of stop-related information, and the actual name and the specific format for notifying the information are not limited to the above-described specific examples.

The Reserved field 403 is a field that is not used.

An Option field 1 (indicated by reference numeral 404) is a field where additional information is stored, and uses the fields starting from the second octet of the PDU. In the present embodiment, as the additional information, the remaining time for which the relay UE can continue the relay function is stored. Note that this is illustrative, and other suitable configurations may be used. For example, in addition to the remaining time for continuing the relay function described above, a field indicating a reason why the relay UE cannot continue the relay function may be added.

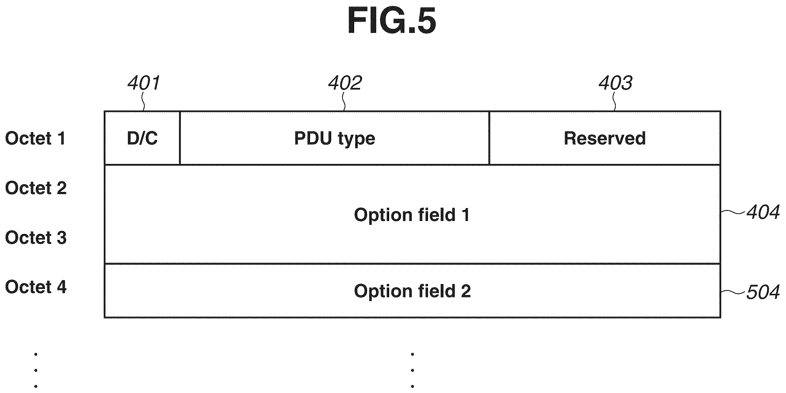

Fig. 5 is a diagram illustrating a configuration example of a PDU that indicates that the relay function cannot be continued, in which a reason why the relay UE cannot continue the relay function is additionally included. In Fig. 5, an Option field 2 (indicated by reference numeral 504) is added to the format illustrated in Fig. 4. A value indicating the reason why the relay function cannot be continued is stored in the Option field 2. The reason why the relay function cannot be continued will be described below.

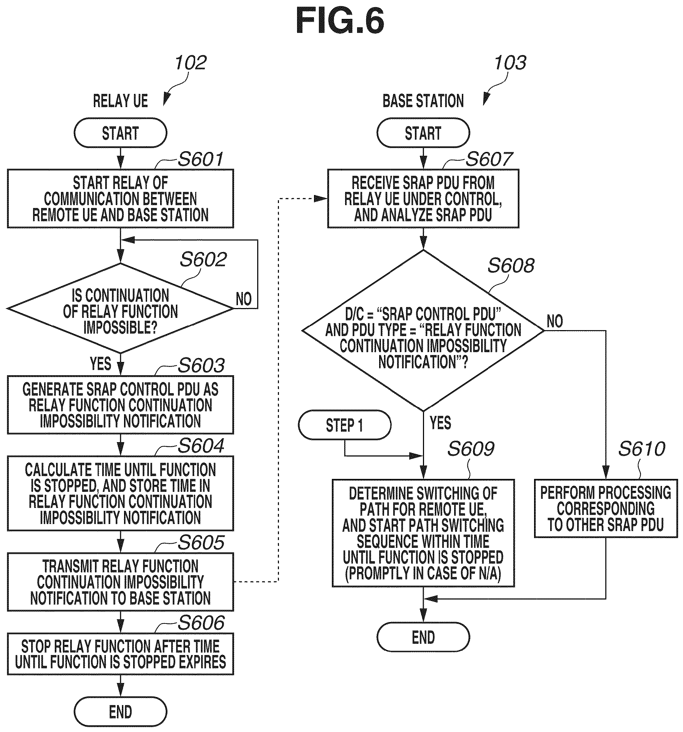

Next, the operation according to the present embodiment will be described with reference to Fig. 6.

Fig. 6 is an example of a flowchart of processing for notifying that the relay function cannot be continued by the relay UE and for determining switching from an indirect path to a direct path by the base station 103 that has received the notification. The processing illustrated in the flowchart can be implemented at the base station when the control unit 201 executes a control program stored in the storage unit 202 to perform calculation and processing of information and control of various hardware components. Similarly, at the UE B (102), the processing illustrated in the flowchart can be implemented when the control unit 301 executes a control program stored in the storage unit 302 to perform calculation and processing of information and control of various hardware components.

In the present embodiment, the UE B (102) serving as the relay UE performs relaying by using the Sidelink Relay processing unit 304. In other words, in step S601, the UE B (102) relays communication of user data (such as streaming data) between the UE A (101) serving as the remote UE and the base station 103 via an indirect path.

In step S602, the control unit 301 of the UE B (102) determines whether continuation of the relay function of the own terminal is impossible. In a case where the control unit 301 of the UE B (102) determines that continuation of the relay function of the own terminal is impossible, the control unit 301 of the UE B (102) notifies the Sidelink Relay processing unit 304 of a relay function continuation impossibility. Here, in a case where a predetermined condition is satisfied, the control unit 301 may determine that continuation of the relay function of the own terminal is impossible. In this case, the predetermined condition may be a condition related to the state (apparatus state and communication state) of the relay UE. For example, in a case where any one of the following conditions (1) to (7) is satisfied, the control unit 301 may determine that continuation of the relay function of the own terminal is impossible.
Condition (1) The remaining battery level of the terminal falls below a threshold.
Condition (2) A hardware failure is detected.
Condition (3) A part of processes (e.g., process operating to implement the signal intensity measurement unit 303) disappears.
Condition (4) An off control of the NR Sidelink Relay function is executed by the user or a user application.
Condition (5) A power off or power reset control is executed by the user.
Condition (6) The signal intensity of the PC5 link falls below a threshold.
Condition (7) The signal intensity of the Uu link falls below a threshold.

Alternatively, in a case where any combination of two or more of the above-described conditions (1) to (7) is satisfied, the control unit 301 may determine that continuation of the relay function of the own terminal is impossible. Further, any of the above-described conditions (1) to (7), such as the condition (1), may be determined in a manner that includes prediction. For example, with respect to the condition (1), in a case where the remaining battery level of the own terminal falls below the threshold but the terminal is currently charging or is scheduled to be charged shortly, the condition (1) may be determined as not satisfied. Furthermore, with respect to the condition (1), in a case where the battery of the own terminal is also used for purposes other than communication (e.g., for movement), the remaining battery level may be considered only for the portion available for communication.

In another embodiment, the following condition (8) may also be determined in addition to the above-described conditions (1) to (7).
Condition (8) The temperature of the terminal (own apparatus) exceeds an upper limit temperature.

In step S603, the Sidelink Relay processing unit 304, upon receiving the notification from the control unit 301, generates the SRAP control PDU indicating a relay function continuation impossibility described above through the SRAP PDU generation processing unit 305. In the following, the SRAP control PDU indicating a relay function continuation impossibility described above may be referred to as a relay function continuation impossibility notification. In step S604, the SRAP PDU generation processing unit 305 stores a time until the relay function is stopped, which has been calculated by the control unit 301, in the Option field 1 (404). In the present embodiment, the Option field is set to two bytes, and stores a value from 0 to 65535. The unit is seconds, and the value 0 is stored in a case where calculation is impossible (N/A). Further, as an option, an Option field 2 504 may be added to store a value corresponding to any of the above-described conditions (1) to (8). In the present embodiment, the following values are settable. In this case, the base station 103 can identify the reason why for stopping the relay function in the relay UE.
0 Battery level low (set in case where condition (1) is satisfied)
1 Failure (caused by hardware) (set in case where condition (2) is satisfied)
2 Failure (caused by software) (set in case where condition (3) is satisfied)
3 Sidelink Relay function turned off (set in case where condition (4) is satisfied)
4 Power off or power reset (set in case where condition (5) is satisfied)
5 PC5 link signal intensity low (set in case where condition (6) is satisfied)
6 Uu link signal intensity low (set in case where condition (7) is satisfied)
7 Terminal temperature high (set in case where condition (8) is satisfied)

In step S605, the Sidelink Relay processing unit 304 transmits the relay function continuation impossibility notification to the base station 103 through the wireless communication unit 307. In step S606, in a case where the time until the relay function is stopped, which has been calculated calculated in step S604, has elapsed, the control unit 301 stops the function of the Sidelink Relay processing unit 304. In the case where calculation is impossible, the function of the Sidelink Relay processing unit 304 is stopped after a time (e.g., 60 seconds) set as an initial value has expired. In a modification, the function of the Sidelink Relay processing unit 304 may be stopped before the predetermined time has elapsed.

In step S607, when the wireless communication unit 207 of the base station 103 receives the SRAP PDU, the SRAP PDU analysis processing unit 206 analyzes the content of the received SRAP PDU.

In step S608, it is determined through analysis whether the value of the D/C field 401 indicates "SRAP Control PDU" and the value of the PDU type field 402 indicates "relay function continuation impossibility". In a case where the value of the D/C field 401 indicates "SRAP Control PDU" and the value of the PDU type field 402 indicates "relay function continuation impossibility" (i.e., above-described "relay function continuation impossibility notification"), the processing proceeds to step S609. In step S609, the SRAP PDU analysis processing unit 206 determines that the SRAP PDU is a relay function continuation impossibility notification. The SRAP PDU analysis processing unit 206 then interprets the value stored in the Option field 1 (404) as the time until the relay function is stopped, and acquires the value. The control unit 201 determines that the UE B (102) is unable to continue the relay function, based on a result of the analysis by the SRAP PDU analysis processing unit 206. In this case, the control unit 201 requests the path switching processing unit 204 to switch the path of the UE A (101) within the time until the relay function is stopped (or immediately in case of N/A). The path switching processing unit 204 switches the UE A (101) from the indirect path to the direct path. In a case where the received SRAP PDU is not the relay function continuation impossibility notification, processing corresponding to other SRAP PDUs is performed in step S610.

Through the above-described flow, in the case where the UE B (102) is unable to continue relaying, the UE B (102) and the base station 103 can switch the UE A (101) from the indirect path to the direct path without disconnecting service.

In the above-described manner, according to the present embodiment, it is possible to provide the mechanism that enables the base station 103 to acquire information related to the stop of the relay function of the relay UE (102) (relay function continuation impossibility notification). As a result, based on the relay function continuation impossibility notification, the base station 103 can switch the UE A (101) from the indirect path to the direct path while maintaining the service for the UE A (101).

Further, according to the present embodiment, the relay UE (102) can include the time information until the relay function is stopped in the relay function continuation impossibility notification. In this case, the base station 103 can switch the UE A (101) from the indirect path to the direct path at an appropriate timing based on such time information.

### <Second Embodiment>

The configuration of the communication apparatuses (Fig. 1) and the functional configurations of the communication apparatuses (Fig. 2 and Fig. 3) according to the second embodiment are similar to those according to the first embodiment.

In the first embodiment, the example has been described in which, in the case where the NR Sidelink Relay function of the relay UE cannot be continued, the base station 103 can switch the remote UE without disconnecting the service. In the second embodiment, an example is described in which the NR Sidelink Relay function of the relay UE is temporarily interrupted. For example, it occurs in a case where a program that occupies CPU usage or network bandwidth is executed on the relay UE, making the NR Sidelink Relay function unusable until the program is completed. Such a program may be, for example, an application for throughput measurement, but is not limited thereto.

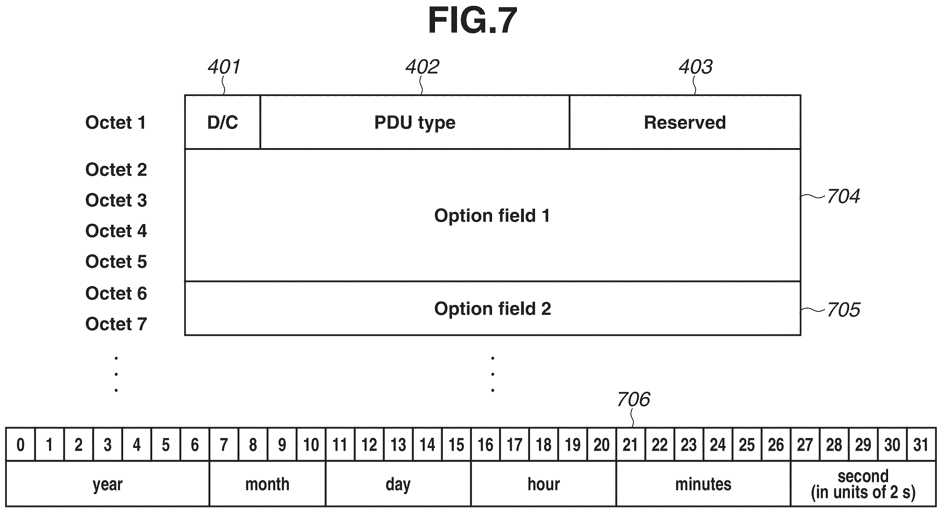

In the present embodiment, as a second predetermined condition, in a case where the relay UE temporarily interrupts its NR Sidelink relay function, the NR Sidelink relay function is stopped by such an interruption. More specifically, in a case where the relay UE temporarily interrupts its NR Sidelink relay function, the SRAP PDU generation processing unit 305 generates a PDU for notifying the base station of the interruption of the relay function. Fig. 7 illustrates a configuration example of a PDU indicating interruption of the relay function (example of stop-related information).

The D/C field 401 has a value of 1, that is, a value indicating the SRAP Control PDU, followed by the 4-bit PDU type field 402 and the 3-bit Reserved field 403. The configuration in which option fields follow thereafter is similar to those illustrated in Fig. 4 and Fig. 5.

In the present embodiment, in a case where the PDU type field 402 has a value of 0001, it indicates "relay function interruption". Hereinafter, the SRAP Control PDU is referred to as a "relay function interruption notification". The relay function interruption notification sets the Option field 1 704 to four bytes, and the Option field 2 705 to two bytes.

The scheduled time for the relay interruption is stored in the Option field 1 704. The values settable in four bytes are as illustrated in 706 of Fig. 7, and the bits from MSB 0 to 6 represent the year, where the year 2023 is represented as 0, and values up to 127 (year 2150) may be stored. The subsequent bits from 7 to 10 represent the month, and values from 1 to 12 may be stored. The bits from 11 to 15 represent the day, and values from 1 to 31 may be stored. The bits from 16 to 20 represent the hour, and values from 0 to 23 may be stored. The bits from 21 to 26 represent the minute, and values from 0 to 59 may be stored. Finally, the bits from 27 to 31 represent seconds, and values 0 to 29 may be specified in units of 2 seconds.

A recovery time of the relay function after interruption is stored in the Option field 2 705. In the present embodiment, any value from 1 to 65535 seconds can be set.

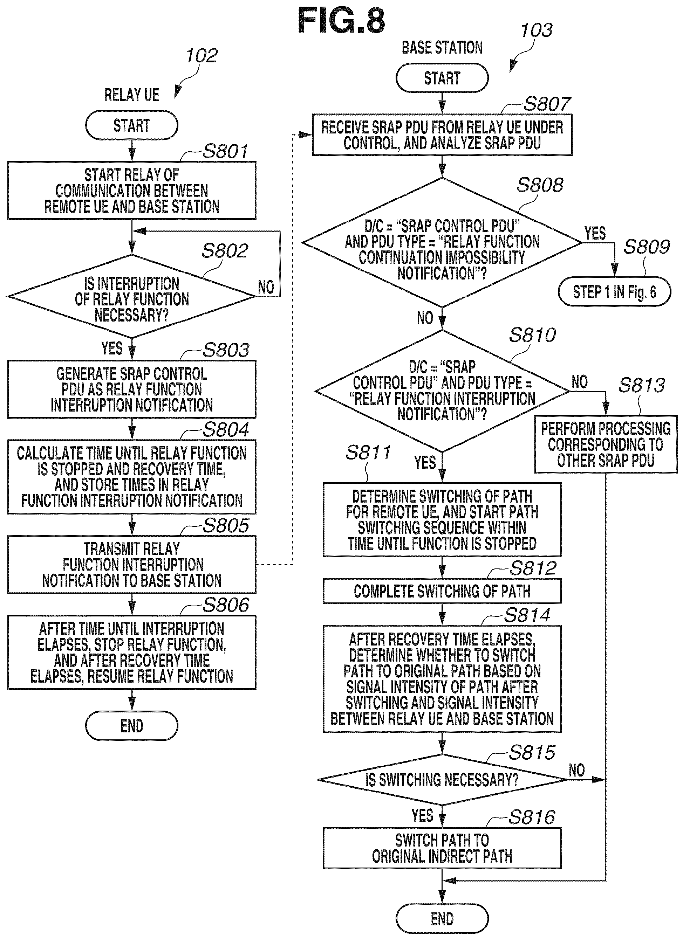

Next, the operation according to the present embodiment is described with reference to Fig. 8.

Fig. 8 is an example of a flowchart illustrating notification of relay function interruption notification by the relay UE and determination by the base station, which has received the notification, to switch from the indirect path to the direct path.

In the second embodiment, the UE B (102) serving as the relay UE performs relaying by using the Sidelink Relay processing unit 304. In other words, in step S801, the UE B (102) relays communication of user data (such as streaming data) between the UE A (101) serving as the remote UE and the base station 103 via the indirect path.

In step S802, the control unit 301 of the UE B (102) determines whether interruption of the relay function of the own terminal is necessary. In a case where the control unit 301 of the UE B (102) determines that interruption of the relay function of the own terminal is necessary, the processing proceeds to step S803 and subsequent steps in order to notify the Sidelink Relay processing unit 304 of the relay function interruption.

In step S803, the Sidelink Relay processing unit 304, upon receiving the notification from the control unit 301, generates the PDU indicating the relay function interruption described above (hereinafter, referred to as relay function interruption notification) through the SRAP PDU generation processing unit 305. In step S804, the SRAP PDU generation processing unit 305 stores the time until the relay function is interrupted, calculated by the control unit 301, in the Option field 1 704. Further, the SRAP PDU generation processing unit 305 stores the recovery time of the relay function calculated by the control unit 301 in the Option field 2 705.

In step S805, the Sidelink Relay processing unit 304 transmits the relay function interruption notification to the base station 103 via the wireless communication unit 307.

In step S806, in a case where the relay interruption time calculated in step S804 is reached, the control unit 301 stops the function of the Sidelink Relay processing unit 304. When the recovery time calculated in step S804 has elapsed after the interruption time, the control unit 301 resumes the Sidelink Relay processing unit 304.

In step S807, when the wireless communication unit 207 of the base station 103 receives the SRAP PDU, the SRAP PDU analysis processing unit 206 analyzes the content of the received SRAP PDU.

Subsequently, in step S808, the SRAP PDU analysis processing unit 206 determines whether the value of the D/C field 401 indicates "SRAP Control PDU" and the value of the PDU type field 402 indicates "relay function continuation impossibility". In a case where the value of the D/C field 401 indicates "SRAP Control PDU" and the value of the PDU type field 402 indicates "relay function continuation impossibility" (i.e., above-described "relay function continuation impossibility notification"), the following processing is performed. In step S809, the SRAP PDU analysis processing unit 206 determines that the SRAP PDU is the relay function continuation impossibility notification (Fig. 4 and Fig. 5), and the processing proceeds to step S609 in accordance with STEP 1 illustrated in Fig. 6 according to the first embodiment.

In a case where the value of the D/C field 401 indicates "SRAP Control PDU" and the value of the PDU type field 402 indicates "relay function interruption" (i.e., above-described "relay function interruption notification"), the following processing is performed. The SRAP PDU analysis processing unit 206 determines that the SRAP PDU is the relay function interruption notification, interprets that the value stored in the Option field 1 704 is the time until the relay function is interrupted, and acquires the value. Further, the SRAP PDU analysis processing unit 206 interprets that the value stored in the Option field 2 705 is the recovery time after the interruption of the relay function, and acquires the value.

In step S811, based on a result of the analysis by the SRAP PDU analysis processing unit 206, the control unit 201 recognizes that the UE B (102) interrupts the relay function, and requests the path switching processing unit 204 to switch the path of the UE A (101) within the time until the relay function is interrupted. In step S812, the path switching processing unit 204 switches the UE A (101) from the indirect path to the direct path. In a case where the received SRAP PDU is not the relay function interruption notification, processing corresponding to other SRAP PDUs is performed in step S813.

In step S814, after the recovery time of the relay function for the UE B (102) acquired in step S810 has elapsed, the control unit 201 acquires the signal intensity with the UE A (101), which has been switched in step S812, and the signal intensity with the UE B (102) from the UE management unit 203, and performs a comparison. In step S815, in a case where the signal intensity with the UE B (102) is higher than the signal intensity with the UE A, the control unit determines to perform switching to the original indirect path (i.e., system configuration illustrated in Fig. 1), and the control unit 201 causes the path switching processing unit 204 to switch the path in step S816.

Through the above-described flow, in the case where the UE B (102) interrupts the continuation of relaying, the UE B (102) and the base station 103 can switch the UE A (101) from the indirect path to the direct path without disconnecting the service.

In the present embodiment, it is considered a possibility that the base station 103 may receive both the relay function continuation impossibility notification and the relay function interruption notification. However, it is also possible to adopt a configuration in which, of the relay function continuation impossibility notification and the relay function interruption notification, only the relay function interruption notification is used. In this case, in the flow illustrated in Fig. 8, steps S808 and S809 may be omitted.

Although the embodiments have been described in detail above, the present disclosure is not limited to the specific embodiments, and various modifications and changes can be made within the scope described in the claims. Furthermore, all or a plurality of components of the embodiments described above can be combined.

For example, in the above-described embodiments, switching from the indirect path to the direct path is performed based on the relay function continuation impossibility notification and the relay function interruption notification; however, this is not limited thereto. For example, switching from the indirect path to another indirect path using another relay UE may be realized based on the relay function continuation impossibility notification and the relay function interruption notification. For example, in a case where the signal intensity between the UE A (101) and the base station 103 is lower than signal intensity between the UE A (101) and another UE (UE other than UE B (102)), switching to an indirect path via the other UE may be realized.

Further, in the above-described embodiments, it may be possible to use a method of notifying gNodeB (gNB) of a relay function continuation impossibility and a relay function interruption impossibility by using radio resource control (RRC) connection between the base station and the relay UE in place of the SRAP.

The present invention is not limited to the above embodiments, and various changes and modifications can be made without departing from the spirit and scope of the invention. Accordingly, the following claims are appended to publicly disclose the scope of the invention.

This application claims the benefit of Japanese Patent Application No. 2023-096727, filed June 13, 2023, which is hereby incorporated by reference herein in its entirety.

## Claims

1. A communication apparatus comprising:
a Sidelink relay unit configured to relay communication between a base station and remote user equipment (UE);
a generation unit configured to generate a Sidelink Adaptation Protocol (SRAP) control protocol data unit (PDU) that is a PDU of SRAP; and
a transmission unit configured to transmit the SRAP control PDU generated by the generation unit,
wherein, in a case where a predetermined condition is satisfied under a situation where relay by the Sidelink relay unit is performed, the generation unit stores, in the SRAP control PDU, stop-related information related to a stop of the relay by the Sidelink relay unit.

2. The communication apparatus according to Claim 1, wherein the predetermined condition relates to a state of the own apparatus.

3. The communication apparatus according to Claim 1 or 2, further comprising a first detection unit configured to detect a remaining amount of a battery that supplies power to the own apparatus,
wherein the predetermined condition is satisfied in a case where the remaining amount of the battery detected by the first detection unit falls below a threshold.

4. The communication apparatus according to any one of Claims 1 to 3, further comprising a second detection unit configured to detect predetermined abnormality in the own apparatus,
wherein the predetermined condition is satisfied in a case where the predetermined abnormality is detected by the second detection unit.

5. The communication apparatus according to Claim 4, wherein the predetermined abnormality includes at least one of a hardware failure of the own apparatus and disappearance of a process in software installed in the own apparatus.

6. The communication apparatus according to any one of Claims 1 to 5, wherein the predetermined condition is satisfied in a case where a function related to the Sidelink relay unit is turned off.

7. The communication apparatus according to any one of Claims 1 to 6, wherein the predetermined condition is satisfied in a case where a power supply of the own apparatus is turned off or reset.

8. The communication apparatus according to any one of Claims 1 to 7, further comprising a first measurement unit configured to measure signal intensity of a signal received from the remote UE,
wherein the predetermined condition is satisfied in a case where the signal intensity falls below a threshold.

9. The communication apparatus according to any one of Claims 1 to 8, further comprising a second measurement unit configured to measure signal intensity of a signal received from the base station,
wherein the predetermined condition is satisfied in a case where the signal intensity falls below a threshold.

10. The communication apparatus according to any one of Claims 1 to 9, wherein the generation unit stores a value indicating "SRAP control PDU" in a D/C field of the SRAP control PDU.

11. The communication apparatus according to any one of Claims 1 to 10, wherein the generation unit stores the stop-related information in a PDU type field of the SRAP control PDU.

12. The communication apparatus according to any one of Claims 1 to 11, wherein the stop-related information includes at least one of information indicating a stop of a function related to the Sidelink relay unit, information indicating a time until the stop, information indicating a cause of the stop, and information indicating a time until resuming after the stop.

13. A base station comprising:
a communication unit configured to communicate with remote user equipment (UE) via relay UE;
a reception unit configured to receive a Sidelink Adaptation Protocol (SRAP) control protocol data unit (PDU), which is a PDU of SRAP, from the relay UE; and
a control unit configured to, in a case where the reception unit receives the SRAP control PDU in which stop-related information related to a stop of relay performed via the relay UE is stored, perform communication control for the communication unit based on the stop-related information.

14. The base station according to Claim 13, wherein, in a case where a value indicating "SRAP control PDU" is stored in a D/C field of the SRAP control PDU, the control unit performs the communication control based on the stop-related information stored in a PDU type field of the SRAP control PDU.

15. The base station according to Claim 13, wherein the communication control includes instructing the remote UE to perform a switch from an indirect path via the relay UE to another path based on the stop-related information.

16. The base station according to Claim 15, wherein the stop-related information includes at least one of information indicating a stop of a function of performing relay to the remote UE via the relay UE, information indicating a time until the stop, information indicating a cause of the stop, and information indicating a time until resuming after the stop.

17. The base station according to Claim 16, wherein the communication control includes instructing to perform the switch within the time until the stop based on the information indicating the time until the stop.

18. The base station according to Claim 16 or 17, wherein the communication control includes instructing to perform a switch from the another path to the indirect path after the switch based on the information indicating the time until resuming after the stop.

19. A method of controlling communication, the method comprising:
a relay step of relaying communication between a base station and remote user equipment (UE);
a generating step of generating a Sidelink Adaptation Protocol (SRAP) control protocol data unit (PDU) that is a PDU of SRAP; and
a transmitting step of transmitting the SRAP control PDU generated by the generating step,
wherein, in a case where a predetermined condition is satisfied under a situation where relay is performed by the relay step, the generating step includes storing, in the SRAP control PDU, stop-related information related to a stop of the relay by the relay step.

20. A program causing a computer to perform:
a relay step of relaying communication between a base station and remote user equipment (UE);
a generating step of generating a Sidelink Adaptation Protocol (SRAP) control protocol data unit (PDU) that is a PDU of SRAP; and
a transmitting step of transmitting the SRAP control PDU generated by the generating step,
wherein, in a case where a predetermined condition is satisfied under a situation where relay is performed by the relay step, the generating includes storing, in the SRAP control PDU, stop-related information related to a stop of the relay by the relay step.

21. A control method comprising:
a communicating step of communicating with remote UE via relay user equipment (UE);
a receiving step of receiving a Sidelink Adaptation Protocol (SRAP) control protocol data unit (PDU), which is a PDU of SRAP, from the relay UE; and
a control step of performing, in a case where the SRAP control PDU in which stop-related information related to a stop of relay performed via the relay UE is stored is received by the receiving step, communication control related to the communicating step based on the stop-related information.

22. A program causing a computer to perform:
a communicating step of communicating with remote user equipment (UE) via relay UE;
a receiving step of receiving a Sidelink Adaptation Protocol (SRAP) control protocol data unit (PDU), which is a PDU of SRAP, from the relay UE; and
a control step of performing, in a case where the SRAP control PDU in which stop-related information related to a stop of relay performed via the relay UE is stored is received by the receiving step, communication control related to the communicating step based on the stop-related information.

23. A communication apparatus comprising:
a Sidelink relay unit configured to relay communication between a base station and remote user equipment (UE); and
a notification unit configured to, in a case where a predetermined condition is satisfied under a situation where relay by the Sidelink relay unit is performed, notify the base station of stop-related information related to a stop of the relay by the Sidelink relay unit.
